# EUROPEAN PATENT APPLICATION

(11) **EP 3 919 534 A1**
(43) Date of publication of application: **08.12.2021**
(21) Application number: 20749459.2
(22) Date of filing: 24.01.2020
(51) Int. Cl.: C08F 297/04, H01M 4/139, H01M 4/62

(54) **BINDER COMPOSITION FOR NONAQUEOUS SECONDARY BATTERY ELECTRODES, SLURRY COMPOSITION FOR NONAQUEOUS SECONDARY BATTERY ELECTRODES, ELECTRODE FOR NONAQUEOUS SECONDARY BATTERIES, AND NONAQUEOUS SECONDARY BATTERY**

(30) Priority: 30.01.2019 JP 2019014633
(71) Applicant: Zeon Corporation, Tokyo 100-8246 (JP)
(72) Inventor: YAMAMOTO, Norikazu, Tokyo 100-8246 (JP); SONO, Masayo, Tokyo 100-8246 (JP); AKABANE, Tetsuya, Tokyo 100-8246 (JP); TANAKA, Keiichiro, Tokyo 100-8246 (JP)
(74) Representative: Maiwald Patent- und Rechtsanwaltsgesellschaft mbH
(86) International application number: PCT/JP2020/002598
(87) International publication number: WO 2020/158626

(57) **Abstract**

Provided is a binder composition for a non-aqueous secondary battery electrode that enables production of a slurry composition that can be used in high-speed application and high-speed pressing and that enables formation of an electrode for a non-aqueous secondary battery that can cause a non-aqueous secondary battery to display excellent low-temperature cycle characteristics. The binder composition contains water and a particulate polymer that is formed of a polymer including a block region formed of an aromatic vinyl monomer unit. The particulate polymer has a volume-average particle diameter of not less than 0.08 µm and less than 0.6 µm.

## Description

### TECHNICAL FIELD

The present disclosure relates to a binder composition for a non-aqueous secondary battery electrode, a slurry composition for a non-aqueous secondary battery electrode, an electrode for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode for a secondary battery, such as a lithium ion secondary battery, normally includes a current collector and an electrode mixed material layer formed on the current collector. The electrode mixed material layer is formed by, for example, applying a slurry composition in which an electrode active material, a binder-containing binder composition, and so forth are dispersed in a dispersion medium onto the current collector, drying a coating film of the slurry composition on the current collector, and then pressing the slurry composition that has been dried (hereinafter, referred to as "dried slurry").

In recent years, there have been attempts to improve binder compositions used in the formation of electrode mixed material layers in order to further improve secondary battery performance.

In one specific example, Patent Literature (PTL) 1 proposes a technique for increasing peel strength of an electrode for a secondary battery and improving battery characteristics such as high-temperature cycle characteristics by using a binder composition that contains, in a specific content ratio, a particulate polymer A having a volume-average particle diameter of not less than 0.6 µm and not more than 2.5 µm and a particulate polymer B having a volume-average particle diameter of not less than 0.01 µm and not more than 0.5 µm.

### CITATION LIST

### Patent Literature

PTL 1: WO2017/056404A1

### SUMMARY

### (Technical Problem)

In recent years, there has been demand for high-speed application of a slurry composition onto a current collector and also high-speed pressing of dried slurry formed on the current collector so as to increase the production speed of an electrode mixed material layer from a viewpoint of improving electrode productivity. There has also been demand for secondary batteries to display not only excellent cycle characteristics at high temperatures as described above, but to also display excellent cycle characteristics in comparatively low-temperature environments, such as at the start of operation, in fields such as electric vehicles, for example (i.e., to have excellent low-temperature cycle characteristics).

However, when a slurry composition obtained using the conventional binder composition described above has been used in high-speed application and high-speed pressing, there have been instances in which problems have occurred during high-speed pressing, such as attachment of dried slurry to a pressing part (for example, a pressing roll) of a pressing device and peeling of dried slurry from a current collector. Moreover, even when an electrode mixed material layer has been formed using a slurry composition obtained using the conventional binder composition described above, there have been instances in which it has been difficult for an electrode including the electrode mixed material layer to cause a secondary battery to display sufficiently good low-temperature cycle characteristics.

Accordingly, one object of the present disclosure is to provide a binder composition for a non-aqueous secondary battery electrode that enables production of a slurry composition that can be used in high-speed application and high-speed pressing and that enables formation of an electrode for a non-aqueous secondary battery that can cause a non-aqueous secondary battery to display excellent low-temperature cycle characteristics.

Another object of the present disclosure is to provide a slurry composition for a non-aqueous secondary battery electrode that can be used in high-speed application and high-speed pressing and that enables formation of an electrode for a non-aqueous secondary battery that can cause a non-aqueous secondary battery to display excellent low-temperature cycle characteristics.

Another object of the present disclosure is to provide an electrode for a non-aqueous secondary battery that can cause a non-aqueous secondary battery to display excellent low-temperature cycle characteristics.

Another object of the present disclosure is to provide a non-aqueous secondary battery having excellent low-temperature cycle characteristics.

### (Solution to Problem)

The inventors conducted diligent investigation with the aim of solving the problems set forth above. The inventors discovered that by using a binder composition containing water and a particulate polymer that includes a block region formed of an aromatic vinyl monomer unit and that has a volume-average particle diameter within a specific range, it is possible to form a slurry composition that can be used in high-speed application and high-speed pressing and a non-aqueous secondary battery that has excellent low-temperature cycle characteristics, and, in this manner, completed the present disclosure.

Specifically, the present disclosure aims to advantageously solve the problems set forth above, and a presently disclosed binder composition for a non-aqueous secondary battery electrode comprises: a particulate polymer formed of a polymer including a block region formed of an aromatic vinyl monomer unit; and water, wherein the particulate polymer has a volume-average particle diameter of not less than 0.08 µm and less than 0.6 µm. A slurry composition that is obtained using a binder composition containing water and a particulate polymer including a block region formed of an aromatic vinyl monomer unit and having a volume-average particle diameter within the range set forth above in this manner enables good production of an electrode through high-speed application and high-speed pressing. Moreover, an electrode produced in this manner can cause a non-aqueous secondary battery to display excellent low-temperature cycle characteristics.

Note that a "monomer unit" of a polymer referred to in the present disclosure is a "repeating unit derived from that monomer that is included in a polymer obtained using the monomer".

Moreover, when a polymer is said to "include a block region formed of a monomer unit" in the present disclosure, this means that "a section where only such monomer units are bonded in a row as repeating units is present in the polymer".

Furthermore, the term "volume-average particle diameter" as used in the present disclosure refers to a "particle diameter (D50) at which, in a particle size distribution (by volume) measured by laser diffraction, cumulative volume calculated from a small diameter end of the distribution reaches 50%".

The presently disclosed binder composition for a non-aqueous secondary battery electrode preferably further comprises an organic solvent.

In the presently disclosed binder composition for a non-aqueous secondary battery electrode, the organic solvent preferably has a solubility in water at 20°C of not less than 0.5 mass% and not more than 15 mass%. When the binder composition contains an organic solvent having a solubility in water at 20°C that is within the range set forth above, low-temperature cycle characteristics of a non-aqueous secondary battery can be further improved.

Note that the "solubility in water at 20°C" of an organic solvent referred to in the present disclosure can be measured by chromatography, such as gas chromatography, for example.

In the presently disclosed binder composition for a non-aqueous secondary battery electrode, the organic solvent preferably has a relative permittivity at 20°C of 14 or more. When the binder composition contains an organic solvent having a relative permittivity at 20°C that is not less than the value set forth above, electrolyte solution can be caused to permeate well into an electrode when, during production of a secondary battery, electrolyte solution is injected into a casing that houses a battery member such as an electrode in the inside thereof (i.e., electrolyte solution injectability can be improved).

Note that the "relative permittivity at 20°C" of an organic solvent referred to in the present disclosure can be measured by a coaxial probe method, for example.

In the presently disclosed binder composition for a non-aqueous secondary battery electrode, the organic solvent preferably has a content of not less than 1 mass ppm and not more than 3,000 mass ppm. When the proportion (concentration) constituted by the organic solvent in the binder composition is within the range set forth above, the effect of improving low-temperature cycle characteristics of a non-aqueous secondary battery and/or the effect of improving electrolyte solution injectability described above can be obtained even better.

Note that the "content of an organic solvent" in a binder composition referred to in the present disclosure can be measured by chromatography, such as gas chromatography, for example.

In the presently disclosed binder composition for a non-aqueous secondary battery electrode, the organic solvent preferably has a content of not less than 1.0 × 10⁻⁴ parts by mass and not more than 0.1 parts by mass per 100 parts by mass of the particulate polymer. When the quantitative ratio of the organic solvent relative to the particulate polymer in the binder composition is within the range set forth above, the effect of improving low-temperature cycle characteristics of a non-aqueous secondary battery and/or the effect of improving electrolyte solution injectability described above can be obtained even better.

In the presently disclosed binder composition for a non-aqueous secondary battery electrode, the polymer preferably further includes either or both of an aliphatic conjugated diene monomer unit and an alkylene structural unit. When the polymer includes an aliphatic conjugated diene monomer unit and/or an alkylene structural unit, low-temperature cycle characteristics of a non-aqueous secondary battery can be further improved.

Moreover, the present disclosure aims to advantageously solve the problems set forth above, and a presently disclosed slurry composition for a non-aqueous secondary battery electrode comprises: an electrode active material; and any one of the binder compositions for a non-aqueous secondary battery electrode set forth above. A slurry composition that contains an electrode active material and any one of the binder compositions set forth above in this manner enables good production of an electrode through high-speed application and high-speed pressing. Moreover, an electrode that is produced in this manner can cause a non-aqueous secondary battery to display excellent low-temperature cycle characteristics.

Furthermore, the present disclosure aims to advantageously solve the problems set forth above, and a presently disclosed electrode for a non-aqueous secondary battery comprises an electrode mixed material layer formed using the slurry composition for a non-aqueous secondary battery electrode set forth above. An electrode that includes an electrode mixed material layer obtained using a slurry composition containing an electrode active material and any one of the binder compositions set forth above in this manner can cause a non-aqueous secondary battery to display excellent low-temperature cycle characteristics.

Also, the present disclosure aims to advantageously solve the problems set forth above, and a presently disclosed non-aqueous secondary battery comprises the electrode for a non-aqueous secondary battery set forth above. By using the electrode for a non-aqueous secondary battery set forth above in this manner, it is possible to produce a non-aqueous secondary battery having excellent low-temperature cycle characteristics.

### (Advantageous Effect)

According to the present disclosure, it is possible to provide a binder composition for a non-aqueous secondary battery electrode that enables production of a slurry composition that can be used in high-speed application and high-speed pressing and that enables formation of an electrode for a non-aqueous secondary battery that can cause a non-aqueous secondary battery to display excellent low-temperature cycle characteristics.

Moreover, according to the present disclosure, it is possible to provide a slurry composition for a non-aqueous secondary battery electrode that can be used in high-speed application and high-speed pressing and that enables formation of an electrode for a non-aqueous secondary battery that can cause a non-aqueous secondary battery to display excellent low-temperature cycle characteristics.

Furthermore, according to the present disclosure, it is possible to provide an electrode for a non-aqueous secondary battery that can cause a non-aqueous secondary battery to display excellent low-temperature cycle characteristics.

Also, according to the present disclosure, it is possible to provide a non-aqueous secondary battery having excellent low-temperature cycle characteristics.

### DETAILED DESCRIPTION

The following provides a detailed description of embodiments of the present disclosure.

The presently disclosed binder composition for a non-aqueous secondary battery electrode can be used to produce the presently disclosed slurry composition for a non-aqueous secondary battery electrode. Moreover, the presently disclosed slurry composition for a non-aqueous secondary battery electrode can be used to form an electrode of a non-aqueous secondary battery (electrode for a non-aqueous secondary battery), such as a lithium ion secondary battery. Furthermore, a feature of the presently disclosed electrode for a non-aqueous secondary battery is that it includes an electrode mixed material layer formed from the presently disclosed slurry composition for a non-aqueous secondary battery electrode. Also, a feature of the presently disclosed non-aqueous secondary battery is that it includes an electrode for a non-aqueous secondary battery produced using the presently disclosed slurry composition for a non-aqueous secondary battery electrode.

### (Binder composition for non-aqueous secondary battery electrode)

The presently disclosed binder composition contains a particulate polymer and water as a dispersion medium, and optionally further contains other components.

Features of the presently disclosed binder composition are that the aforementioned particulate polymer contains a polymer including a block region formed of an aromatic vinyl monomer unit and the particulate polymer has a volume-average particle diameter of not less than 0.08 µm and less than 0.6 µm.

As a result of the presently disclosed binder composition containing, in water, a particulate polymer that includes a block region formed of an aromatic vinyl monomer unit and that has a volume-average particle diameter within the range set forth above, the binder composition can be used to produce a slurry composition that can be used in high-speed application and high-speed pressing and can also be used to produce an electrode that can cause a secondary battery to display excellent low-temperature cycle characteristics. Although it is not clear why this effect is obtained by using a binder composition in which the particulate polymer set forth above is dispersed in water, the reason for this is presumed to be as follows.

Firstly, the polymer forming the particulate polymer that is contained in the binder composition includes a block region formed of an aromatic vinyl monomer unit. This block region is a hydrophobic region in which only aromatic vinyl monomer units are bonded in a row and can interact well with hydrophobic sites at the surface of an electrode active material (graphite, etc.). In addition, the particulate polymer has a large contact area with an electrode active material in a slurry composition as a result of having a comparatively small volume-average particle diameter of not less than 0.08 µm and less than 0.6 µm. This interaction and the effect of improving contact area act in conjunction to enable the formation of dried slurry in which an electrode active material and a polymer derived from the particulate polymer are strongly bound when a slurry composition that is obtained using the presently disclosed binder composition is applied onto a current collector at high speed and then dried. Moreover, even when such dried slurry is subjected to high-speed pressing, peeling of the dried slurry from the current collector is thought to be inhibited due to the polymer being strongly bound with the electrode active material.

Furthermore, there are instances in which a particulate polymer in a slurry composition that has been applied onto a current collector at high speed moves (migrates) in a surface direction of the slurry composition at an opposite side to the current collector due to thermal convection or the like during drying of the slurry composition. However, the use of a particulate polymer having a small volume-average particle diameter can increase binding strength of the particulate polymer and an electrode active material as previously described and can inhibit migration of the particulate polymer. As a result, a polymer derived from the particulate polymer can be uniformly distributed in an obtained electrode mixed material layer. Moreover, the use of a particulate polymer having a small volume-average particle diameter makes it possible to relatively increase the number of particles of the particulate polymer as compared to a case in which the same mass of a particulate polymer having a large volume-average particle diameter is used. It is thought that as a consequence of a large number of fine particles of a polymer serving as a binder being uniformly distributed in an electrode mixed material layer in this manner, a phenomenon of excessive concentration of coordination of charge carriers (lithium ions, etc.) at the surface of the electrode active material can be inhibited and excellent secondary battery low-temperature cycle characteristics can be achieved.

Therefore, the presently disclosed binder composition can be used to obtain a slurry composition that can be used in high-speed application and high-speed pressing. Moreover, by using an electrode that is produced using a slurry composition containing the presently disclosed binder composition, it is possible to cause a non-aqueous secondary battery to display excellent low-temperature cycle characteristics.

### <Particulate polymer>

The particulate polymer is a component that functions as a binder, and, in an electrode mixed material layer formed on a current collector using a slurry composition that contains the binder composition, the particulate polymer holds components such as an electrode active material contained in the electrode mixed material layer so that these components do not detach from the electrode mixed material layer.

The particulate polymer is water-insoluble particles that are formed of a specific polymer. Note that when particles are referred to as "water-insoluble" in the present disclosure, this means that when 0.5 g of polymer is dissolved in 100 g of water at a temperature of 25°C, insoluble content is 90 mass% or more.

### «Polymer»

The polymer forming the particulate polymer is a copolymer that includes a block region formed of an aromatic vinyl monomer unit (hereinafter, also referred to simply as an "aromatic vinyl block region") and a macromolecule chain section in which repeating units other than aromatic vinyl monomer units are linked (hereinafter, also referred to simply as the "other region"). The aromatic vinyl block region and the other region are present adjacently in the polymer. Moreover, the polymer may include just one aromatic vinyl block region or may include a plurality of aromatic vinyl block regions. Likewise, the polymer may include just one other region or may include a plurality of other regions.

### [Aromatic vinyl block region]

The aromatic vinyl block region is a region that only includes an aromatic vinyl monomer unit as a repeating unit as previously described.

A single aromatic vinyl block region may be composed of just one type of aromatic vinyl monomer unit or may be composed of a plurality of types of aromatic vinyl monomer units, but is preferably composed of just one type of aromatic vinyl monomer unit.

Moreover, a single aromatic vinyl block region may include a coupling moiety (i.e., aromatic vinyl monomer units composing a single aromatic vinyl block region may be linked via a coupling moiety).

In a case in which the polymer includes a plurality of aromatic vinyl block regions, the types and proportions of aromatic vinyl monomer units composing these aromatic vinyl block regions may be the same or different for each thereof, but are preferably the same.

Examples of aromatic vinyl monomers that can form a constituent aromatic vinyl monomer unit of the aromatic vinyl block region in the polymer include aromatic monovinyl compounds such as styrene, styrene sulfonic acid and salts thereof, α-methylstyrene, p-t-butylstyrene, butoxystyrene, vinyltoluene, chlorostyrene, and vinylnaphthalene. Of these aromatic vinyl monomers, styrene is preferable from a viewpoint of causing even better interactions between the aromatic vinyl block region of the polymer and hydrophobic sites at the surface of an electrode active material and further inhibiting peeling of dried slurry from a current collector during high-speed application and high-speed pressing. Note that although one of these aromatic vinyl monomers may be used individually or two or more of these aromatic vinyl monomers may be used in combination, it is preferable that one aromatic vinyl monomer is used individually.

The proportion constituted by an aromatic vinyl monomer unit in the polymer when the amount of all repeating units (monomer units and structural units) in the polymer is taken to be 100 mass% is preferably 10 mass% or more, and more preferably 15 mass% or more, and is preferably 50 mass% or less, and more preferably 45 mass% or less. When the proportion constituted by an aromatic vinyl monomer unit in the polymer is 10 mass% or more, the aromatic vinyl block region of the polymer can interact even better with an electrode active material. Accordingly, peeling of dried slurry from a current collector during high-speed application and high-speed pressing can be further inhibited. On the other hand, when the proportion constituted by an aromatic vinyl monomer unit in the polymer is 50 mass% or less, flexibility of the polymer is ensured, and dried slurry can easily be pressed even during high-speed pressing.

Note that the proportion constituted by an aromatic vinyl monomer unit in the polymer is normally the same as the proportion constituted by the aromatic vinyl block region in the polymer.

### [Other region]

As previously described, the other region is a region that includes only a repeating unit other than an aromatic vinyl monomer unit (hereinafter, also referred to simply as the "other repeating unit") as a repeating unit.

Note that a single other region may be composed of one type of other repeating unit or may be composed of a plurality of types of other repeating units.

Moreover, a single other region may include a coupling moiety (i.e., other repeating units composing a single other region may be linked via a coupling moiety).

Furthermore, the other region may include a graft portion and/or a cross-linked structure.

In a case in which the polymer includes a plurality of other regions, the types and proportions of other repeating units composing these other regions may be the same or different for each thereof.

Although no specific limitations are placed on the other repeating unit composing the other region of the polymer, an aliphatic conjugated diene monomer unit and/or an alkylene structural unit are preferable from a viewpoint of ensuring flexibility of the polymer and further improving low-temperature cycle characteristics of a secondary battery, for example.

Examples of aliphatic conjugated diene monomers that can form an aliphatic conjugated diene monomer unit include conjugated diene compounds having a carbon number of 4 or more such as 1,3-butadiene, isoprene, 2,3-dimethyl-1,3-butadiene, and 1,3-pentadiene. One of these aliphatic conjugated diene monomers may be used individually, or two or more of these aliphatic conjugated diene monomers may be used in combination. Of these aliphatic conjugated diene monomers, isoprene and 1,3-butadiene are preferable from a viewpoint of further improving low-temperature cycle characteristics of a secondary battery.

The proportion constituted by an aliphatic conjugated diene monomer unit in the polymer when the amount of all repeating units (monomer units and structural units) in the polymer is taken to be 100 mass% is preferably 50 mass% or more, and more preferably 55 mass% or more, and is preferably 90 mass% or less, and more preferably 85 mass% or less. When the proportion constituted by an aliphatic conjugated diene monomer unit in the polymer is within any of the ranges set forth above, flexibility of the polymer can be ensured while also further improving low-temperature cycle characteristics of a secondary battery.

Note that an aliphatic conjugated diene monomer unit in the polymer may be cross-linked (i.e., the polymer may include a structural unit obtained through cross-linking of an aliphatic conjugated diene monomer unit as an aliphatic conjugated diene monomer unit). Thus, the polymer forming the particulate polymer may be a polymer obtained through cross-linking of a polymer that includes an aliphatic conjugated diene monomer unit and a block region formed of an aromatic vinyl monomer unit.

Moreover, a structural unit obtained through cross-linking of an aliphatic conjugated diene monomer unit can be introduced into the polymer through cross-linking of a polymer that includes an aliphatic conjugated diene monomer unit and a block region formed of an aromatic vinyl monomer unit.

The cross-linking can be performed using a radical initiator such as a redox initiator that is a combination of an oxidant and a reductant, for example, but is not specifically limited to being performed in this manner. Examples of oxidants that can be used include organic peroxides such as diisopropylbenzene hydroperoxide, cumene hydroperoxide, t-butyl hydroperoxide, 1,1,3,3-tetramethylbutyl hydroperoxide, di-t-butyl peroxide, isobutyryl peroxide, and benzoyl peroxide. Examples of reductants that can be used include compounds that include a metal ion in a reduced state such as ferrous sulfate and copper(I) naphthenate; sulfonic acid compounds such as sodium methanesulfonate; and amine compounds such as dimethylaniline. One of these organic peroxides or reductants may be used individually, or two or more of these organic peroxides or reductants may be used in combination.

Note that the cross-linking may be performed in the presence of a crosslinker such as a polyvinyl compound (divinylbenzene, etc.), a polyallyl compound (diallyl phthalate, triallyl trimellitate, diethylene glycol bis(allyl carbonate), etc.), or any of various glycols (ethylene glycol diacrylate, etc.). Moreover, the cross-linking can be performed through irradiation with active energy rays such as γ-rays.

An alkylene structural unit is a repeating unit that is composed of only an alkylene structure represented by a general formula: ―CₙH₂ₙ― (n is an integer of 2 or more).

Although the alkylene structural unit may be linear or branched, the alkylene structural unit is preferably linear (i.e., is preferably a linear alkylene structural unit). Moreover, the carbon number of the alkylene structural unit is preferably 4 or more (i.e., n in the preceding general formula is preferably an integer of 4 or more).

No specific limitations are placed on the method by which an alkylene structural unit is introduced into the polymer. A method in which the polymer is obtained by hydrogenating a polymer including an aliphatic conjugated diene monomer unit and a block region formed of an aromatic vinyl monomer unit in order to convert an aliphatic conjugated diene monomer unit to an alkylene structural unit, for example, is preferable in terms of ease of production of the polymer.

The aliphatic conjugated diene monomer used in this method may, for example, be any of the previously described conjugated diene compounds having a carbon number of 4 or more that can be used as an aliphatic conjugated diene monomer for forming an aliphatic conjugated diene monomer unit, of which, isoprene and 1,3-butadiene are preferable. In other words, the alkylene structural unit is preferably a structural unit obtained through hydrogenation of an aliphatic conjugated diene monomer unit (i.e., is preferably a hydrogenated aliphatic conjugated diene unit), and is more preferably a structural unit obtained through hydrogenation of an isoprene unit and/or a 1,3-butadiene unit (i.e., is more preferably a hydrogenated isoprene unit and/or a hydrogenated 1,3-butadiene unit). Selective hydrogenation of an aliphatic conjugated diene monomer unit can be carried out by a commonly known method such as an oil-layer hydrogenation method or a water-layer hydrogenation method.

The total amount of an aliphatic conjugated diene monomer unit and an alkylene structural unit in the polymer when the amount of all repeating units (monomer units and structural units) in the polymer is taken to be 100 mass% is preferably 50 mass% or more, and more preferably 55 mass% or more, and is preferably 90 mass% or less, and more preferably 85 mass% or less. When the total proportion constituted by an aliphatic conjugated diene monomer unit and an alkylene structural unit in the polymer is within any of the ranges set forth above, flexibility of the polymer can be ensured while also further improving low-temperature cycle characteristics of a secondary battery.

The other region of the polymer may include repeating units other than the aliphatic conjugated diene monomer unit and the alkylene structural unit described above. Specifically, the other region of the polymer may include other monomer units such as an acidic group-containing monomer unit (carboxyl group-containing monomer unit, sulfo group-containing monomer unit, phosphate group-containing monomer unit, etc.), a nitrile group-containing monomer unit (acrylonitrile unit, methacrylonitrile unit, etc.), and a (meth)acrylic acid ester monomer unit (acrylic acid alkyl ester unit, methacrylic acid alkyl ester unit, etc.). In the present disclosure, "(meth)acrylic acid" is used to indicate "acrylic acid" and/or "methacrylic acid".

Of these other monomer units, the inclusion of an acidic group-containing monomer unit in the other region of the polymer is preferable from a viewpoint of causing good dispersion of the particulate polymer in a slurry composition while also further improving low-temperature cycle characteristics of a secondary battery.

Note that the acidic group of an acidic group-containing monomer unit may form a salt with an alkali metal, ammonia, or the like.

Examples of carboxyl group-containing monomers that can form a carboxyl group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as butyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, dimethylmaleic anhydride, and citraconic anhydride.

An acid anhydride that produces a carboxyl group through hydrolysis can also be used as a carboxyl group-containing monomer.

Furthermore, an ethylenically unsaturated polybasic carboxylic acid such as butene tricarboxylic acid, a partial ester of an ethylenically unsaturated polybasic carboxylic acid such as monobutyl fumarate or mono-2-hydroxypropyl maleate, or the like can be used as a carboxyl group-containing monomer.

Examples of sulfo group-containing monomers that can form a sulfo group-containing monomer unit include styrene sulfonic acid, vinyl sulfonic acid (ethylene sulfonic acid), methyl vinyl sulfonic acid, (meth)allyl sulfonic acid, and 3-allyloxy-2-hydroxypropane sulfonic acid.

Note that in the present disclosure, "(meth)allyl" is used to indicate "allyl" and/or "methallyl".

Examples of phosphate group-containing monomers that can form a phosphate group-containing monomer unit include 2-(meth)acryloyloxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

One of the monomers described above may be used individually, or two or more of the monomers described above may be used in combination. Moreover, methacrylic acid, itaconic acid, and acrylic acid are preferable, and methacrylic acid is more preferable as an acidic group-containing monomer that can form an acidic group-containing monomer unit.

In a case in which the polymer includes an acidic group-containing monomer unit, the proportion constituted by the acidic group-containing monomer unit in the polymer when the amount of all repeating units (monomer units and structural units) in the polymer is taken to be 100 mass% is preferably 0.1 mass% or more, more preferably 0.5 mass% or more, and even more preferably 1 mass% or more, and is preferably 15 mass% or less, more preferably 10 mass% or less, and even more preferably 5 mass% or less.

Other monomers units such as the acidic group-containing monomer unit, nitrile group-containing monomer unit, and (meth)acrylic acid ester monomer unit described above can be introduced into the polymer using any polymerization method, such as graft polymerization, without any specific limitations. Note that in a case in which another monomer unit is introduced by graft polymerization, the polymer includes a graft portion and has a structure in which a polymer constituting the graft portion is bonded to a polymer constituting a backbone portion.

The graft polymerization can be performed by a known graft polymerization method without any specific limitations. Specifically, the graft polymerization can be performed using a radical initiator such as a redox initiator that is a combination of an oxidant and a reductant, for example. Note that a known addition method such as batch addition, split addition, or continuous addition can be adopted as the method by which the oxidant and the reductant are added. The oxidant and the reductant can be the same as any of the previously described oxidants and reductants that can be used in cross-linking of a polymer that includes an aliphatic conjugated diene monomer unit and a block region formed of an aromatic vinyl monomer unit.

Moreover, in a case in which graft polymerization using a redox initiator is to be performed with respect to a polymer that includes an aliphatic conjugated diene monomer unit and a block region formed of an aromatic vinyl monomer unit, introduction of another monomer unit through graft polymerization and aliphatic conjugated diene monomer unit cross-linking can be caused to proceed concurrently. Note that graft polymerization and cross-linking do not have to be caused to proceed concurrently, and the type of radical initiator and the reaction conditions may be adjusted such that only graft polymerization proceeds.

### [Volume-average particle diameter]

The volume-average particle diameter of the particulate polymer used in the present disclosure is required to be not less than 0.08 µm and less than 0.6 µm. The volume-average particle diameter of the particulate polymer is preferably 0.1 µm or more, more preferably 0.12 µm or more, and even more preferably 0.15 µm or more, and is preferably 0.55 µm or less, more preferably 0.5 µm or less, and even more preferably 0.4 µm or less. When the volume-average particle diameter of the particulate polymer is less than 0.08 µm, sufficient binding strength between the particulate polymer and an electrode active material cannot be ensured. Consequently, attachment of dried slurry to a pressing roll or the like during high-speed application and high-speed pressing cannot be inhibited, and low-temperature cycle characteristics of a secondary battery deteriorate. On the other hand, when the volume-average particle diameter of the particulate polymer is 0.6 µm or more, peeling of dried slurry from a current collector during high-speed application and high-speed pressing cannot be inhibited, and low-temperature cycle characteristics of a secondary battery deteriorate.

Note that the volume-average particle diameter of the particulate polymer can be adjusted by, for example, altering the amount (concentration) of polymer in a preliminary mixture used in phase-inversion emulsification in the subsequently described emulsification step. Specifically, reducing the amount (concentration) of polymer in the preliminary mixture can reduce the volume-average particle diameter of the particulate polymer that is obtained through phase-inversion emulsification.

### «Production method of particulate polymer»

The particulate polymer formed of the polymer described above can be produced, for example, through a step of block polymerizing monomers such as the aromatic vinyl monomer and the aliphatic conjugated diene monomer described above in an organic solvent to obtain a solution of a polymer (block polymer) including an aromatic vinyl block region (block polymer solution production step), a step of adding water to the obtained block polymer solution and performing emulsification to form particles of the block polymer (emulsification step), and, optionally, a step of performing graft polymerization with respect to the particles of the block polymer (grafting step).

Note that the grafting step may be performed before the emulsification step in production of the particulate polymer. In other words, the particulate polymer may be produced by implementing a step of performing graft polymerization with respect to the obtained block polymer after the block polymer solution production step to obtain a solution of a specific polymer (grafting step) and subsequently implementing a step of adding water to the obtained solution of the specific polymer and performing emulsification to form particles of the specific polymer (emulsification step).

### [Block polymer solution production step]

No specific limitations are placed on the method of block polymerization in the block polymer solution production step. For example, a block polymer can be produced by adding a second monomer component to a solution obtained through polymerization of a first monomer component differing from the second monomer component, polymerizing the second monomer component, and further repeating addition and polymerization of monomer components as necessary. An organic solvent that is used as a reaction solvent is not specifically limited and can be selected as appropriate depending on the types of monomers and so forth.

A block polymer obtained through block polymerization in this manner is preferably subjected to a coupling reaction using a coupling agent in advance of the subsequently described emulsification step. Through this coupling reaction, it is possible to cause bonding between the ends of diblock structures contained in the block polymer via the coupling agent and to thereby convert these diblock structures to a triblock structure, for example.

Examples of coupling agents that can be used in the coupling reaction include, but are not specifically limited to, difunctional coupling agents, trifunctional coupling agents, tetrafunctional coupling agents, and coupling agents having a functionality of 5 or higher.

Examples of difunctional coupling agents include difunctional halosilanes such as dichlorosilane, monomethyldichlorosilane, and dichlorodimethylsilane; difunctional haloalkanes such as dichloroethane, dibromoethane, methylene chloride, and dibromomethane; and difunctional tin halides such as tin dichloride, monomethyltin dichloride, dimethyltin dichloride, monoethyltin dichloride, diethyltin dichloride, monobutyltin dichloride, and dibutyltin dichloride.

Examples of trifunctional coupling agents include trifunctional haloalkanes such as trichloroethane and trichloropropane; trifunctional halosilanes such as methyltrichlorosilane and ethyltrichlorosilane; and trifunctional alkoxysilanes such as methyltrimethoxysilane, phenyltrimethoxysilane, and phenyltriethoxysilane.

Examples of tetrafunctional coupling agents include tetrafunctional haloalkanes such as carbon tetrachloride, carbon tetrabromide, and tetrachloroethane; tetrafunctional halosilanes such as tetrachlorosilane and tetrabromosilane; tetrafunctional alkoxysilanes such as tetramethoxysilane and tetraethoxysilane; and tetrafunctional tin halides such as tin tetrachloride and tin tetrabromide.

Examples of coupling agents having a functionality of 5 or higher include 1,1,1,2,2-pentachloroethane, perchloroethane, pentachlorobenzene, perchlorobenzene, octabromodiphenyl ether, and decabromodiphenyl ether.

One of these coupling agents may be used individually, or two or more of these coupling agents may be used in combination.

Of the examples given above, dichlorodimethylsilane is preferable as the coupling agent. As a result of the coupling reaction using the coupling agent, a coupling moiety derived from the coupling agent is introduced into a constituent macromolecule chain (for example, a triblock structure) of the block polymer.

Note that the block polymer solution that is obtained after the block polymerization and optional coupling reaction described above may be subjected to the subsequently described emulsification step in that form or may be subjected to the emulsification step after the block polymer has, as necessary, been hydrogenated as previously described.

### [Emulsification step]

Although no specific limitations are placed on the method of emulsification in the emulsification step, a method in which phase-inversion emulsification is performed with respect to a preliminary mixture of the block polymer solution obtained in the block polymer solution production step and an aqueous solution of an emulsifier is preferable, for example. As previously described, the volume-average particle diameter of the particulate polymer that is obtained can be adjusted by altering the concentration of the block polymer in the preliminary mixture that is used in phase-inversion emulsification. Note that the phase-inversion emulsification can be carried out using a known emulsifier and emulsifying/dispersing device, for example.

### [Grafting step]

Although no specific limitations are placed on the method of graft polymerization in the grafting step, a method in which graft polymerization and cross-linking of the block polymer are caused to proceed concurrently in the presence of a monomer that is to be graft polymerized using a radical initiator such as a redox initiator is preferable, for example. The reaction conditions can be adjusted in accordance with the chemical composition of the block polymer and so forth.

By performing the block polymer solution production step, the emulsification step, and, optionally, the grafting step in this manner, it is possible to obtain a water dispersion of a particulate polymer that is formed of a polymer including a block region formed of an aromatic vinyl monomer unit and that has a volume-average particle diameter of not less than 0.08 µm and less than 0.6 µm.

### <Dispersion medium>

The dispersion medium of the presently disclosed binder composition is not specifically limited so long as it includes water. For example, the presently disclosed binder composition may contain just water as the dispersion medium or may contain a mixture of water and an organic solvent (for example, an ester, a ketone, or an alcohol) as the dispersion medium. Also note that the presently disclosed binder composition may contain one organic solvent or may contain two or more organic solvents.

### «Organic solvent»

### [Solubility in water at 20°C]

The solubility in water at 20°C of an organic solvent that can optionally be contained in the presently disclosed binder composition is preferably 0.5 mass% or more, more preferably 1.0 mass% or more, even more preferably 3.0 mass% or more, and particularly preferably 5.95 mass% or more, and is preferably 15 mass% or less, more preferably 13 mass% or less, and even more preferably 12 mass% or less. When an organic solvent contained in the binder composition has a solubility in water at 20°C of 0.5 mass% or more, migration of the particulate polymer in a slurry composition that is applied onto a current collector at high speed can be inhibited because the surface tension of the water-containing dispersion medium is reduced. Consequently, a polymer derived from the particulate polymer can be uniformly distributed in an obtained electrode mixed material layer, and low-temperature cycle characteristics of a secondary battery can be further improved. On the other hand, when an organic solvent contained in the binder composition has a solubility in water at 20°C of 15 mass% or less, excessive reduction of surface tension of the water-containing dispersion medium by the organic solvent is inhibited, and excessive aggregation of the particulate polymer does not occur. Consequently, low-temperature cycle characteristics of a secondary battery can be sufficiently ensured.

### [Relative permittivity at 20°C]

The relative permittivity at 20°C of an organic solvent that can optionally be contained in the presently disclosed binder composition is preferably 14 or more, and more preferably 15 or more. When an organic solvent contained in the binder composition has a relative permittivity at 20°C of 14 or more, electrolyte solution injectability during secondary battery production can be improved. This is presumed to be because wettability of an electrode with electrolyte solution can be improved through the organic solvent remaining in the electrode, and precipitation of a supporting electrolyte (salt) in the electrolyte solution can be prevented. The upper limit for the relative permittivity at 20°C of the organic solvent is not specifically limited but can, for example, be set as 50 or less, 30 or less, or 22 or less.

### [Type]

Specific examples of organic solvents that can be used include known organic solvents (for example, esters, ketones, alcohols, and glycol ethers) without any specific limitations. One of these organic solvents may be used individually, or two or more of these organic solvents may be used in combination in a freely selected ratio.

No specific limitations are placed on organic solvents having a solubility in water at 20°C of not less than 0.5 mass% and not more than 15 mass% that may be used. For example, the following are examples of esters, ketones, and alcohols having a solubility within this range.

Examples of esters include ethyl acetate, n-propyl acetate, isopropyl acetate, and isobutyl acetate.

Examples of ketones include 2-pentanone, 3-pentanone, and 2-hexanone.

Examples of alcohols include 1-butanol, 2-butanol, and 1-hexanol.

One of these organic solvents may be used individually, or two or more of these organic solvents may be used in combination in a freely selected ratio. Of these organic solvents, ethyl acetate and 2-pentanone are preferable from a viewpoint of further improving low-temperature cycle characteristics of a secondary battery.

Note that the solubility in water at 20°C can be measured by chromatography, such as gas chromatography, as previously described. Such solubilities are also provided in "ORGANIC SOLVENTS: PHYSICAL PROPERTIES AND METHODS OF PURIFICATION" (Fourth Edition, A Wiley-Interscience Publication, 1986, p. 198-404) and "The Solubility of Ethyl Acetate in Water" (Journal of the American Chemical Society, 1953, Vol. 75 (7), p. 1727).

Examples of organic solvents having a relative permittivity at 20°C of 14 or more include, but are not specifically limited to, ketones such as acetone, methyl ethyl ketone, methyl isobutyl ketone, diisobutyl ketone, cyclohexanone, isophorone, tetrahydrofuran, and 2-pentanone; alcohols such as methanol, ethanol, propanol, butanol, isobutyl alcohol, isopropyl alcohol, methylcyclohexanol, and 2-butanol; esters such as methyl acetate, butyl acetate, isobutyl acetate, isopropyl acetate, ethyl lactate, and glycol acetate; glycol ethers such as glycol dimethyl ether, glycol monoethyl ether, and dioxane; N,N-dimethylformamide; dimethyl sulfoxide; N-methylpyrrolidone; acetonitrile; propylene carbonate; ethylene carbonate; and tetrahydrofuran.

One of these organic solvents may be used individually, or two or more of these organic solvents may be used in combination in a freely selected ratio. Of these organic solvents, 2-butanol, 2-pentanone, and methyl ethyl ketone are preferable from a viewpoint of improving electrolyte solution injectability during production of a secondary battery.

### [Content]

The proportion (concentration) constituted by the above-described organic solvent in the binder composition is preferably 1 mass ppm or more, more preferably 2 mass ppm or more, even more preferably 5 mass ppm or more, and particularly preferably 100 mass ppm or more, and is preferably 3,000 mass ppm or less, more preferably 2,500 mass ppm or less, and even more preferably 2,000 mass ppm or less. When the proportion (concentration) constituted by an organic solvent such as described above (particularly an organic solvent having a solubility in water at 20°C of not less than 0.5 mass% and not more than 15 mass%) in the binder composition is 1 mass ppm or more, migration of the particulate polymer in a slurry composition that has been applied onto a current collector at high speed can be inhibited because the surface tension of the water-containing dispersion medium is reduced. Consequently, a polymer derived from the particulate polymer can be uniformly distributed in an obtained electrode mixed material layer, and low-temperature cycle characteristics of a secondary battery can be further improved. On the other hand, when the proportion (concentration) constituted by an organic solvent such as described above (particularly an organic solvent having a solubility in water at 20°C of not less than 0.5 mass% and not more than 15 mass%) in the binder composition is 3,000 mass ppm or less, excessive reduction of the surface tension of the water-containing dispersion medium by the organic solvent is inhibited, and excessive aggregation of the particulate polymer does not occur. Consequently, low-temperature cycle characteristics of a secondary battery can be sufficiently ensured.

Moreover, when the proportion (concentration) constituted by an organic solvent such as described above (particularly an organic solvent having a relative permittivity at 20°C of 14 or more) in the binder composition is within any of the ranges set forth above, electrolyte solution injectability during production of a secondary battery can be further improved.

The binder composition preferably contains 1.0 × 10⁻⁴ parts by mass or more, more preferably 2.0 × 10⁻⁴ parts by mass or more, and even more preferably 3.5 × 10⁻³ parts by mass or more of an organic solvent such as described above per 100 parts by mass of the particulate polymer, and preferably contains 0.1 parts by mass or less, more preferably 0.09 parts by mass or less, even more preferably 0.08 parts by mass or less, and particularly preferably 0.07 parts by mass or less of an organic solvent such as described above per 100 parts by mass of the particulate polymer.

When the content of an organic solvent such as described above (particularly an organic solvent having a solubility in water at 20°C of not less than 0.5 mass% and not more than 15 mass%) in the binder composition is 1.0 × 10⁻⁴ parts by mass or more per 100 parts by mass of the particulate polymer, migration of the particulate polymer in a slurry composition that has been applied onto a current collector at high speed can be inhibited because the surface tension of the water-containing dispersion medium is reduced. Consequently, a polymer derived from the particulate polymer can be uniformly distributed in an obtained electrode mixed material layer, and low-temperature cycle characteristics of a secondary battery can be further improved. On the other hand, when the content of an organic solvent such as described above (particularly an organic solvent having a solubility in water at 20°C of not less than 0.5 mass% and not more than 15 mass%) in the binder composition is 0.1 parts by mass or less per 100 parts by mass of the particulate polymer, excessive reduction of the surface tension of the water-containing dispersion medium by the organic solvent is inhibited, and excessive aggregation of the particulate polymer does not occur. Consequently, low-temperature cycle characteristics of a secondary battery can be sufficiently ensured.

Moreover, when the proportion (concentration) constituted by an organic solvent such as described above (particularly an organic solvent having a relative permittivity at 20°C of 14 or more) in the binder composition is within any of the ranges set forth above, electrolyte solution injectability during production of a secondary battery can be further improved.

### <Other components>

The presently disclosed binder composition can contain components other than those described above (i.e., other components). For example, the binder composition may contain a known particulate binder (styrene butadiene random copolymer, acrylic polymer, etc.) other than the particulate polymer described above. The binder composition may also contain known additives. Examples of such known additives include antioxidants such as 2,6-di-tert-butyl-p-cresol, defoamers, and dispersants. Note that one other component may be used individually, or two or more other components may be used in combination in a freely selected ratio.

### <Production of binder composition for non-aqueous secondary battery electrode>

No specific limitations are placed on the presently disclosed binder composition for a non-aqueous secondary battery electrode. For example, a water dispersion containing a particulate polymer that is obtained through the method described above in the "Production method of particulate polymer" section can be used in that form as the binder composition. Alternatively, an organic solvent and/or other components such as described above may be added to the water dispersion containing the particulate polymer and may be mixed therewith by a known method to obtain the binder composition, for example. Note that in a case in which a water dispersion containing the particulate polymer is used to produce the binder composition, liquid content (for example, water) of the water dispersion may be used in that form as the dispersion medium of the binder composition.

### (Slurry composition for non-aqueous secondary battery electrode)

The presently disclosed slurry composition for a non-aqueous secondary battery electrode is a composition that is used for forming an electrode mixed material layer. The presently disclosed slurry composition for a non-aqueous secondary battery electrode contains an electrode active material and the presently disclosed binder composition for a non-aqueous secondary battery electrode set forth above, and optionally further contains other components. In other words, the presently disclosed slurry composition for a non-aqueous secondary battery electrode normally contains an electrode active material, the previously described particulate polymer, and a dispersion medium, and optionally further contains other components. As a result of containing the binder composition set forth above, the presently disclosed slurry composition can be used in high-speed application and high-speed pressing, and can cause a secondary battery to display excellent low-temperature cycle characteristics.

Although the following describes, as one example, a case in which the slurry composition for a non-aqueous secondary battery electrode is a slurry composition for a lithium ion secondary battery negative electrode, the presently disclosed slurry composition for a non-aqueous secondary battery electrode is not limited to the following example.

### <Electrode active material>

The electrode active material is a material that gives and receives electrons in an electrode of a secondary battery. The negative electrode active material of a lithium ion secondary battery is typically a material that can occlude and release lithium.

Specific examples of negative electrode active materials for lithium ion secondary batteries include carbon-based negative electrode active materials, metal-based negative electrode active materials, and negative electrode active materials formed by combining these materials.

A carbon-based negative electrode active material can be defined as an active material that contains carbon as its main framework and into which lithium can be inserted (also referred to as "doping"). Examples of carbon-based negative electrode active materials include carbonaceous materials and graphitic materials.

Examples of carbonaceous materials include graphitizing carbon and non-graphitizing carbon, typified by glassy carbon, which has a structure similar to an amorphous structure.

The graphitizing carbon may be a carbon material made using tar pitch obtained from petroleum or coal as a raw material. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

Examples of graphitic materials include natural graphite and artificial graphite.

Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.

A metal-based negative electrode active material is an active material that contains metal, the structure of which usually contains an element that allows insertion of lithium, and that has a theoretical electric capacity per unit mass of 500 mAh/g or more when lithium is inserted. Examples of the metal-based active material include lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti); alloys of the simple substance of metal; and oxides, sulfides, nitrides, silicides, carbides, and phosphides of lithium metal, the simple substance of metal, and the alloys of the simple substance of metal. Of these metal-based negative electrode active materials, active materials containing silicon (silicon-based negative electrode active materials) are preferred. One reason for this is that the capacity of a lithium ion secondary battery can be increased through use of a silicon-based negative electrode active material.

Examples of silicon-based negative electrode active materials include silicon (Si), a silicon-containing alloy, SiO, SiOₓ, and a composite material of conductive carbon and a Si-containing material obtained by coating or combining the Si-containing material with the conductive carbon. One of these silicon-based negative electrode active materials may be used individually, or two or more of these silicon-based negative electrode active materials may be used in combination.

### <Binder composition>

The binder composition can be the presently disclosed binder composition that contains the previously described specific particulate polymer and a water-containing dispersion medium and that optionally contains the previously described organic solvent and so forth.

Note that the content of the previously described specific particulate polymer in the slurry composition can, for example, be set as not less than 0.5 parts by mass and not more than 15 parts by mass, in terms of solid content, per 100 parts by mass of the electrode active material.

Preferred ranges for the content of the previously described organic solvent per 100 parts by mass of the particulate polymer in the slurry composition are the same as the corresponding ranges in the presently disclosed binder composition set forth above.

### <Other components>

Examples of other components that may be contained in the slurry composition include, but are not specifically limited to, the same other components as may be contained in the presently disclosed binder composition. The slurry composition may further contain a conductive material such as carbon black. One of these components may be used individually, or two or more of these components may be used in combination in a freely selected ratio.

### <Production of slurry composition for non-aqueous secondary battery electrode>

The slurry composition set forth above can be produced by mixing the above-described components by a known mixing method. This mixing can be performed using a mixer such as a ball mill, a sand mill, a bead mill, a pigment disperser, a grinding machine, an ultrasonic disperser, a homogenizer, a planetary mixer, or a FILMIX.

### (Electrode for non-aqueous secondary battery)

The presently disclosed electrode includes an electrode mixed material layer formed using the presently disclosed slurry composition set forth above, and normally includes a current collector having the electrode mixed material layer formed thereon. The electrode mixed material layer is normally a layer obtained through drying of the presently disclosed slurry composition, normally contains at least an electrode active material and a polymer derived from the previously described particulate polymer, and optionally contains other components. Note that the polymer derived from the previously described particulate polymer may have a particulate form in the electrode mixed material layer (i.e., may be contained still in the form of a particulate polymer in the electrode mixed material layer) or may have any other form in the electrode mixed material layer.

Moreover, the presently disclosed electrode can cause a secondary battery to display excellent low-temperature cycle characteristics as a result of being produced using the presently disclosed slurry composition.

### <Formation method of electrode>

The presently disclosed electrode can be produced, for example, through (1) a step of applying the slurry composition onto a current collector (application step), (2) a step of drying the slurry composition that has been applied onto the current collector to form dried slurry (drying step), and (3) a step of pressing the dried slurry on the current collector (pressing step).

Even when the steps (1) to (3) (particularly steps (1) and (3)) are performed at high speed in formation of the presently disclosed electrode, attachment of dried slurry to a pressing roll or the like and peeling of dried slurry from the current collector can be inhibited as a result of the presently disclosed slurry composition being used.

### «Application step»

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying can be set as appropriate depending on the thickness of the electrode mixed material layer that is to be obtained.

### «Drying step»

The slurry composition on the current collector may be dried by a commonly known method without any specific limitations. Examples of drying methods that can be used include drying by warm, hot, or low-humidity air; drying in a vacuum; and drying by irradiation with infrared light, electron beams, or the like. Drying the slurry composition on the current collector in this manner forms dried slurry on the current collector.

### «Pressing step»

The method by which the dried slurry on the current collector is pressed is not specifically limited, and the pressing can be performed using a known pressing device. In particular, pressing by a pressing roll (i.e., roll pressing) is preferable from a viewpoint of efficiently pressing the dried slurry at high speed. The pressing step can increase the density of the electrode mixed material layer, improve close adherence of the electrode mixed material layer and the current collector, and further improve low-temperature cycle characteristics of a secondary battery.

### (Non-aqueous secondary battery)

The presently disclosed non-aqueous secondary battery includes the presently disclosed electrode for a non-aqueous secondary battery. More specifically, the presently disclosed non-aqueous secondary battery includes a positive electrode, a negative electrode, an electrolyte solution, and a separator, and has the presently disclosed electrode for a non-aqueous secondary battery as at least one of the positive electrode and the negative electrode. The presently disclosed non-aqueous secondary battery has excellent low-temperature cycle characteristics as a result of including the presently disclosed electrode for a non-aqueous secondary battery.

Although the following describes, as one example, a case in which the secondary battery is a lithium ion secondary battery, the presently disclosed secondary battery is not limited to the following example.

### <Electrodes>

As explained above, the presently disclosed electrode for a secondary battery is used as at least one of the positive electrode and the negative electrode. In other words, the positive electrode of the lithium ion secondary battery may be the presently disclosed electrode and the negative electrode of the lithium ion secondary battery may be a known negative electrode other than the presently disclosed electrode. Alternatively, the negative electrode of the lithium ion secondary battery may be the presently disclosed electrode and the positive electrode of the lithium ion secondary battery may be a known positive electrode other than the presently disclosed electrode. Further alternatively, the positive electrode and the negative electrode of the lithium ion secondary battery may both be the presently disclosed electrode.

Note that in the case of a known electrode other than the presently disclosed electrode for a secondary battery, this electrode can be an electrode that is obtained by forming an electrode mixed material layer on a current collector by a known production method.

### <Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that can be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region.

The concentration of the electrolyte in the electrolyte solution may be adjusted as appropriate. Furthermore, known additives may be added to the electrolyte solution.

### <Separator>

The separator is not specifically limited and can be a separator such as described in JP2012-204303A, for example. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

### <Production method of non-aqueous secondary battery>

The presently disclosed non-aqueous secondary battery can be produced by, for example, stacking the positive electrode and the negative electrode with the separator in-between, performing rolling, folding, or the like of the resultant laminate, as necessary, in accordance with the battery shape, placing the laminate in a battery container, injecting the electrolyte solution into the battery container, and sealing the battery container. Note that at least one of the positive electrode and the negative electrode is the presently disclosed electrode for a non-aqueous secondary battery. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. In the examples and comparative examples, the following methods were used to evaluate the volume-average particle diameter of a particulate polymer, the solubility in water at 20°C of an organic solvent, the content of an organic solvent in a binder composition, suitability for high-speed application and high-speed pressing, low-temperature cycle characteristics of a secondary battery, and electrolyte solution injectability during secondary battery production.

### <Volume-average particle diameter of particulate polymer>

The volume-average particle diameter (D50) of a particulate polymer produced in each example or comparative example was measured using a laser diffraction particle diameter distribution analyzer (produced by Beckman Coulter, Inc.; product name: LS-230). Specifically, a water dispersion that had been adjusted to a solid content concentration of the particulate polymer of 0.1 mass% was measured in the analyzer, and the particle diameter at which, in the obtained particle size distribution (by volume), cumulative volume calculated from a small diameter end of the distribution reached 50% was determined as the volume-average particle diameter (µm).

### <Solubility in water at 20°C of organic solvent>

The solubility in water at 20°C of an organic solvent was measured using a gas chromatograph (produced by Shimadzu Corporation; product name: GC-2010 Plus).

### <Content of organic solvent in binder composition>

The content of an organic solvent in a binder composition was measured using a gas chromatograph (produced by Shimadzu Corporation; product name: GC-2010 Plus).

### <Suitability for high-speed application and high-speed pressing>

A slurry composition for a non-aqueous secondary battery negative electrode produced in each example or comparative example was applied onto copper foil of 15 µm in thickness serving as a current collector by a comma coater at an application speed of 60 m/min such as to have a mass per unit area after drying of 11 mg/cm² and was then dried. Continuous pressing of the dried slurry was subsequently performed by a roll press (pressing roll diameter: 500 mm) at a pressing speed of 60 m/min such that the density of the post-pressing negative electrode mixed material layer was 1.75 g/cm³. During this continuous pressing, the presence of attached matter originating from the negative electrode mixed material layer that had become attached to the surface of the pressing roll of the roll press was visually inspected. A lower tendency of attached matter to become attached to the pressing roll surface indicates that the slurry composition used to form the negative electrode mixed material layer is more suitable for high-speed application and high-speed pressing. Specifically, an evaluation was made by the following standard.
A: Attached matter on roll surface not observed even after 800 m of continuous pressing
B: Attached matter on roll surface observed at stage when not less than 500 m and less than 800 m of continuous pressing has been performed
C: Attached matter on roll surface observed at stage when more than 0 m and less than 500 m of continuous pressing has been performed

### <Low-temperature cycle characteristics>

A produced lithium ion secondary battery was left at rest in a 25°C environment for 24 hours. The lithium ion secondary battery was subsequently subjected to a charge/discharge operation of charging to 4.35 V at a charge rate of 0.5C and discharging to 3.0 V at a discharge rate of 0.5C in a 25°C environment, and the initial capacity C0 was measured. The lithium ion secondary battery was also repeatedly subjected to the same charge/discharge operation in a 0°C environment, and the capacity C1 after 50 cycles was measured. A capacity maintenance rate ΔC (= (C1/C0) × 100(%)) was calculated and was evaluated by the following standard. A higher value for the capacity maintenance rate indicates less reduction of discharge capacity and better cycle characteristics at low temperatures (i.e., low-temperature cycle characteristics).
A: Capacity maintenance rate ΔC of 45% or more
B: Capacity maintenance rate ΔC of not less than 40% and less than 45%
C: Capacity maintenance rate ΔC of not less than 35% and less than 40%
D: Capacity maintenance rate ΔC of less than 35%

### <Electrolyte solution injectability>

A post-pressing positive electrode and negative electrode and a separator that were produced in each example or comparative example were each cut out as 6 cm. The positive electrode was placed with the surface at a positive electrode mixed material layer side facing upward, and the cut-out separator was arranged on the positive electrode mixed material layer. Next, the cut-out negative electrode was arranged on the separator such that the surface at a negative electrode mixed material layer side faced toward the separator, and, in this manner, a laminate was produced. The produced laminate was placed inside a 9 cm × 9 cm aluminum pouch, and then 0.2 mL of electrolyte solution (solvent: ethylene carbonate/diethyl carbonate/vinylene carbonate = 68.5/30/1.5 (volume ratio); electrolyte: LiPF₆ of 1 M in concentration) was loaded into the aluminum pouch. The aluminum pouch was subsequently sealed by a heat sealer (produced by TOSEI Corporation; product name: Tabletop Vertical Model SV-300GII). Once 1 minute had elapsed from straight after sealing, the soaking rate of the electrolyte solution was measured using an ultrasonic inspection apparatus (Non-contact Air Coupled Ultrasonic Inspection System NAUT21 produced by Japan Probe Co., Ltd.). An evaluation was made by the following standard. A higher electrolyte solution soaking rate indicates better electrolyte solution injectability during secondary battery production.
A: Electrolyte solution soaking rate of 70% or more
B: Electrolyte solution soaking rate of not less than 65% and less than 70%
C: Electrolyte solution soaking rate of less than 65%

### (Example 1)

### <Production of binder composition for non-aqueous secondary battery negative electrode>

### [Production of cyclohexane solution of block polymer]

A pressure-resistant reactor was charged with 233.3 kg of cyclohexane, 54.2 mmol of N,N,N',N'-tetramethylethylenediamine (hereinafter, referred to as "TMEDA"), and 30.0 kg of styrene as an aromatic vinyl monomer. These materials were stirred at 40°C while 1806.5 mmol of n-butyllithium as a polymerization initiator was added thereto, and then 1 hour of polymerization was performed under heating at 50°C. The polymerization conversion rate of styrene was 100%. Next, 70.0 kg of isoprene as an aliphatic conjugated diene monomer was continuously added into the pressure-resistant reactor over 1 hour while performing temperature control to maintain a temperature of 50°C to 60°C. The polymerization reaction was continued for 1 hour more after addition of the isoprene was complete. The polymerization conversion rate of isoprene was 100%. Next, 722.6 mmol of dichlorodimethylsilane as a coupling agent was added into the pressure-resistant reactor and a coupling reaction was carried out for 2 hours to form a styrene-isoprene coupled block copolymer. Thereafter, 3612.9 mmol of methanol was added to the reaction liquid and was thoroughly mixed therewith to deactivate active terminals. Next, 0.3 parts of 2,6-di-tert-butyl-p-cresol as an antioxidant was added to 100 parts of the reaction liquid (containing 30.0 parts of polymer component) and was mixed therewith. The resultant mixed solution was gradually added dropwise to hot water of 85°C to 95°C to cause volatilization of solvent and obtain a precipitate. The precipitate was pulverized and then hot-air dried at 85°C to collect a dried product containing a block polymer.

The collected dried product was dissolved in cyclohexane to produce a block polymer solution having a block polymer concentration of 0.4%.

### [Phase-inversion emulsification]

Sodium alkylbenzene sulfonate was dissolved in deionized water to produce a 5% aqueous solution.

After loading 5,000 g of the obtain block polymer solution and 5,000 g of the obtained aqueous solution into a tank, preliminary mixing thereof was performed by stirring. Next, the preliminary mixture was transferred from the tank to a continuous high performance emulsifying/dispersing device (produced by Pacific Machinery & Engineering Co., Ltd.; product name: CAVITRON) at a rate of 100 g/min by a metering pump and was stirred at a rotation speed of 20,000 rpm to cause phase-inversion emulsification of the preliminary mixture to obtain an emulsion.

Cyclohexane in the obtained emulsion was then vacuum evaporated using a rotary evaporator. The emulsion that had been subjected to evaporation was subsequently subjected to 10 minutes of centrifugation at 7,000 rpm in a centrifuge (produced by Hitachi Koki Co., Ltd.; product name: Himac CR21N), and then the upper layer portion was withdrawn to perform concentration.

Finally, the upper layer portion was filtered through a 100-mesh screen to obtain a water dispersion containing a particulate block polymer (block polymer latex).

### [Graft polymerization and cross-linking]

Distilled water was added to dilute the obtained block polymer latex such that the amount of water was 850 parts relative to 100 parts (in terms of solid content) of the particulate block polymer. The diluted block polymer latex was loaded into a stirrer-equipped polymerization reactor that had undergone nitrogen purging and was heated to a temperature of 30°C under stirring. In addition, a separate vessel was used to produce a diluted methacrylic acid solution by mixing 4 parts of methacrylic acid as an acidic group-containing monomer and 15 parts of distilled water. The diluted methacrylic acid solution was added over 30 minutes into the polymerization reactor that had been heated to 30°C.

A separate vessel was used to produce a solution (g) containing 7 parts of distilled water and 0.01 parts of ferrous sulfate (produced by Chubu Chelest Co., Ltd.; product name: FROST Fe) as a reductant. The obtained solution was added into the polymerization reactor, 0.5 parts of 1,1,3,3-tetramethylbutyl hydroperoxide (produced by NOF Corporation; product name: PEROCTA H) as an oxidant was subsequently added, and a reaction was carried out at 30°C for 1 hour and then at 70°C for 2 hours to yield a water dispersion of a particulate polymer. The polymerization conversion rate was 99%.

### [Addition of organic solvent]

Next, 3.5 × 10⁻³ parts of ethyl acetate as an organic solvent per 100 parts (in terms of solid content) of the particulate polymer was added to the water dispersion of the particulate polymer obtained as described above to yield a binder composition (organic solvent content: 100 mass ppm). The volume-average particle diameter of the particulate polymer in the obtained binder composition was measured. The result is shown in Table 1.

### <Production of slurry composition for non-aqueous secondary battery negative electrode>

A mixture was obtained by adding 100 parts of artificial graphite (capacity: 360 mAh/g) as a negative electrode active material, 1 part of carbon black (produced by TIMCAL; product name: Super C65) as a conductive material, and 1.2 parts in terms of solid content of a 2% aqueous solution of carboxymethyl cellulose (produced by Nippon Paper Industries Co., Ltd.; product name: MAC-350HC) as a thickener into a planetary mixer equipped with a disper blade. The obtained mixture was adjusted to a solid content concentration of 60% with deionized water and was subsequently mixed at 25°C for 60 minutes. Next, the solid content concentration was adjusted to 52% with deionized water, and a further 15 minutes of mixing was performed at 25°C to obtain a mixed liquid. Deionized water and 2.0 parts in terms of solid content of the binder composition produced as described above were added to the obtained mixed liquid, and the final solid content concentration was adjusted to 48%. The mixed liquid was mixed for a further 10 minutes and was then subjected to a defoaming process under reduced pressure to obtain a slurry composition for a negative electrode having good fluidity. Suitability for high-speed application and high-speed pressing of the slurry composition was evaluated. The result is shown in Table 1.

### <Formation of negative electrode>

The obtained slurry composition for a negative electrode was applied onto copper foil of 15 µm in thickness serving as a current collector by a comma coater at an application speed of 60 m/min such as to have a mass per unit area after drying of 11 mg/cm² and was then dried. Continuous pressing of the resultant dried slurry was subsequently performed by a roll press (pressing roll diameter: 500 mm) at a pressing speed of 60 m/min such that the density of the post-pressing negative electrode mixed material layer was 1.75 g/cm³ to thereby obtain a negative electrode.

### <Formation of positive electrode>

A slurry composition for a positive electrode was obtained by mixing 100 parts of LiCoO₂ having a volume-average particle diameter of 12 µm as a positive electrode active material, 2 parts of acetylene black (produced by Denka Company Limited; product name: HS-100) as a conductive material, 2 parts in terms of solid content of polyvinylidene fluoride (produced by Kureha Corporation; product name: #7208) as a binder, and N-methylpyrrolidone as a solvent, adjusting these materials to a total solid content concentration of 70%, and then mixing these materials using a planetary mixer.

The obtained slurry composition for a positive electrode was applied onto aluminum foil of 20 µm in thickness serving as a current collector by a comma coater such as to have a mass per unit area after drying of 23 mg/cm². The slurry composition was then dried by conveying the aluminum foil inside a 60°C oven for 2 minutes at a speed of 0.5 m/min. Thereafter, 2 minutes of heat treatment was performed at 120°C to obtain a positive electrode web.

The positive electrode web was rolled by roll pressing to obtain a positive electrode having a positive electrode mixed material layer density of 4.0 g/cm³.

### <Preparation of separator>

A separator made of a single layer of polypropylene (produced by Celgard, LLC.; product name: Celgard 2500) was prepared as a separator formed of a separator substrate.

### <Production of lithium ion secondary battery>

The obtained positive electrode was cut out as a rectangle of 49 cm × 5 cm and was placed with the surface at a positive electrode mixed material layer side facing upward. The separator was cut out as 120 cm × 5.5 cm and was arranged on the positive electrode mixed material layer such that the positive electrode was positioned at a longitudinal direction left-hand side of the separator. The obtained negative electrode was cut out as a rectangle of 50 cm × 5.2 cm and was arranged on the separator such that the surface at a negative electrode mixed material layer side faced toward the separator and the negative electrode was positioned at a longitudinal direction right-hand side of the separator. The resultant laminate was wound by a winding machine to obtain a roll. The roll was then packed into an aluminum packing case serving as a battery case, electrolyte solution (solvent: ethylene carbonate/diethyl carbonate/vinylene carbonate = 68.5/30/1.5 (volume ratio); electrolyte: LiPF₆ of 1 M in concentration) was injected such that no air remained, and an opening of the aluminum packing case was closed by heat sealing at 150°C to thereby produce a wound lithium ion secondary battery having a capacity of 800 mAh. Good operation of the lithium ion secondary battery was confirmed.

### (Example 2)

A binder composition for a negative electrode, a slurry composition for a negative electrode, a negative electrode, a positive electrode, a separator, and a lithium ion secondary battery were prepared or produced in the same way as in Example 1 with the exception that 2-butanol was used instead of ethyl acetate as an organic solvent in production of the binder composition for a non-aqueous secondary battery negative electrode. Evaluations were conducted in the same manner as in Example 1. The results are shown in Table 1.

### (Example 3)

A binder composition for a negative electrode, a slurry composition for a negative electrode, a negative electrode, a positive electrode, a separator, and a lithium ion secondary battery were prepared or produced in the same way as in Example 1 with the exception that 2-pentanone was used instead of ethyl acetate as an organic solvent in production of the binder composition for a non-aqueous secondary battery negative electrode. Evaluations were conducted in the same manner as in Example 1. The results are shown in Table 1.

### (Example 4)

A slurry composition for a negative electrode, a negative electrode, a positive electrode, a separator, and a lithium ion secondary battery were prepared or produced in the same way as in Example 1 with the exception that a binder composition for a non-aqueous secondary battery negative electrode produced as described below was used. Evaluations were conducted in the same manner as in Example 1. The results are shown in Table 1.

### <Production of binder composition for non-aqueous secondary battery negative electrode>

### [Production of cyclohexane solution of block polymer]

A dried product containing a block polymer was obtained in the same way as in Example 1 with the exception that 70.0 kg of 1,3-butadiene was used instead of 70.0 kg of isoprene as an aliphatic conjugated diene monomer. The obtained dried product was dissolved in cyclohexane to produce a block polymer solution having a solid content concentration of 1.7%.

### [Phase-inversion emulsification, graft polymerization and cross-linking, and addition of organic solvent]

With the exception that the block polymer solution obtained as described above was used, phase-inversion emulsification, graft polymerization and cross-linking, and addition of organic solvent were performed in the same way as in Example 1 to produce a binder composition.

### (Example 5)

A binder composition for a negative electrode, a slurry composition for a negative electrode, a negative electrode, a positive electrode, a separator, and a lithium ion secondary battery were prepared or produced in the same way as in Example 1 with the exception that the dried product containing the block polymer was dissolved in cyclohexane such that the solid content concentration was 2.5% in production of the binder composition for a non-aqueous secondary battery negative electrode. Evaluations were conducted in the same manner as in Example 1. The results are shown in Table 1.

### (Example 6)

A binder composition for a negative electrode, a slurry composition for a negative electrode, a negative electrode, a positive electrode, a separator, and a lithium ion secondary battery were prepared or produced in the same way as in Example 1 with the exception that the dried product containing the block polymer was dissolved in cyclohexane such that the solid content concentration was 3.0% in production of the binder composition for a non-aqueous secondary battery negative electrode. Evaluations were conducted in the same manner as in Example 1. The results are shown in Table 1.

### (Example 7)

A binder composition for a negative electrode, a slurry composition for a negative electrode, a negative electrode, a positive electrode, a separator, and a lithium ion secondary battery were prepared or produced in the same way as in Example 1 with the exception that ethyl acetate was not used as an organic solvent in production of the binder composition for a non-aqueous secondary battery negative electrode. Evaluations were conducted in the same manner as in Example 1. The results are shown in Table 1.

### (Example 8)

A binder composition for a negative electrode (organic solvent content: 2,100 mass ppm), a slurry composition for a negative electrode, a negative electrode, a positive electrode, a separator, and a lithium ion secondary battery were prepared or produced in the same way as in Example 1 with the exception that the amount of ethyl acetate used as an organic solvent in production of the binder composition for a non-aqueous secondary battery negative electrode was changed to 7.4 × 10⁻² parts by mass per 100 parts by mass of the particulate polymer. Evaluations were conducted in the same manner as in Example 1. The results are shown in Table 1.

### (Example 9)

A slurry composition for a negative electrode, a negative electrode, a positive electrode, a separator, and a lithium ion secondary battery were prepared or produced in the same way as in Example 1 with the exception that a binder composition for a non-aqueous secondary battery negative electrode produced as described below was used. Evaluations were conducted in the same manner as in Example 1. The results are shown in Table 1.

### <Production of binder composition for non-aqueous secondary battery negative electrode>

### [Production of cyclohexane solution of block polymer]

A dried product containing a block polymer was obtained in the same way as in Example 1 with the exception that the amount of styrene used as an aromatic vinyl monomer was changed to 20.0 kg and the amount of isoprene used as an aliphatic conjugated diene monomer was changed to 80.0 kg. The obtained dried product was dissolved in cyclohexane to produce a block polymer solution having a solid content concentration of 1.7%.

### [Phase-inversion emulsification, graft polymerization and cross-linking, and addition of organic solvent]

With the exception that the block polymer solution obtained as described above was used, phase-inversion emulsification, graft polymerization and cross-linking, and addition of organic solvent were performed in the same way as in Example 1 to produce a binder composition.

### (Example 10)

A slurry composition for a negative electrode, a negative electrode, a positive electrode, a separator, and a lithium ion secondary battery were prepared or produced in the same way as in Example 1 with the exception that a binder composition for a non-aqueous secondary battery negative electrode produced as described below was used. Evaluations were conducted in the same manner as in Example 1. The results are shown in Table 1.

### <Production of binder composition for non-aqueous secondary battery negative electrode>

### [Production of cyclohexane solution of block polymer]

A dried product containing a block polymer was obtained in the same way as in Example 1 with the exception that the amount of styrene used as an aromatic vinyl monomer was changed to 42.0 kg and the amount of isoprene used as an aliphatic conjugated diene monomer was changed to 58.0 kg. The obtained dried product was dissolved in cyclohexane to produce a block polymer solution having a solid content concentration of 1.7%.

### [Phase-inversion emulsification, graft polymerization and cross-linking, and addition of organic solvent]

With the exception that the block polymer solution obtained as described above was used, phase-inversion emulsification, graft polymerization and cross-linking, and addition of organic solvent were performed in the same way as in Example 1 to produce a binder composition.

### (Example 11)

A binder composition for a negative electrode, a slurry composition for a negative electrode, a negative electrode, a positive electrode, a separator, and a lithium ion secondary battery were prepared or produced in the same way as in Example 1 with the exception that methyl ethyl ketone was used instead of ethyl acetate as an organic solvent in production of the binder composition for a non-aqueous secondary battery negative electrode. Evaluations were conducted in the same manner as in Example 1. The results are shown in Table 1.

### (Comparative Example 1)

A slurry composition for a negative electrode, a negative electrode, a positive electrode, a separator, and a lithium ion secondary battery were prepared or produced in the same way as in Example 1 with the exception that a binder composition for a non-aqueous secondary battery negative electrode produced as described below was used. Evaluations were conducted in the same manner as in Example 1. The results are shown in Table 1.

### <Production of binder composition for non-aqueous secondary battery negative electrode>

A reactor was charged with 150 parts of deionized water, 25 parts of sodium dodecylbenzenesulfonate aqueous solution (concentration: 10%) as an emulsifier, 30 parts of styrene as an aromatic vinyl monomer, 4 parts of methacrylic acid as a carboxyl group-containing monomer, and 0.5 parts of t-dodecyl mercaptan as a molecular weight modifier in this order. Next, gas inside the reactor was purged three times with nitrogen and then 70 parts of 1,3-butadiene was added as an aliphatic conjugated diene monomer. The reactor was held at 60°C while adding 0.5 parts of potassium persulfate as a polymerization initiator to initiate a polymerization reaction that was then continued under stirring. At the point at which the polymerization conversion rate reached 96%, cooling was performed and 0.1 parts of hydroquinone aqueous solution (concentration: 10%) was added as a polymerization inhibitor to end the polymerization reaction.

Thereafter, residual monomer was removed using a rotary evaporator having a water temperature of 60°C to yield a water dispersion of a particulate random polymer (particulate polymer).

Next, 3.5 × 10⁻³ parts of ethyl acetate as an organic solvent per 100 parts (in terms of solid content) of the particulate polymer was added to the water dispersion of the particulate polymer obtained as described above to yield a binder composition (organic solvent content: 100 mass ppm).

### (Comparative Example 2)

A binder composition for a negative electrode, a slurry composition for a negative electrode, a negative electrode, a positive electrode, a separator, and a lithium ion secondary battery were prepared or produced in the same way as in Example 1 with the exception that the dried product containing the block polymer was dissolved in cyclohexane such that the solid content concentration was 5.3% in production of the binder composition for a non-aqueous secondary battery negative electrode. Evaluations were conducted in the same manner as in Example 1. The results are shown in Table 1.

### (Comparative Example 3)

A binder composition for a negative electrode, a slurry composition for a negative electrode, a negative electrode, a positive electrode, a separator, and a lithium ion secondary battery were prepared or produced in the same way as in Example 1 with the exception that the dried product containing the block polymer was dissolved in cyclohexane such that the solid content concentration was 0.1% in production of the binder composition for a non-aqueous secondary battery negative electrode. Evaluations were conducted in the same manner as in Example 1. The results are shown in Table 1.

In Table 1, shown below:
"ST" indicates styrene unit;
"IP" indicates isoprene unit;
"BD" indicates 1,3-butadiene unit;
"MAA" indicates methacrylic acid unit;
"EA" indicates ethyl acetate;
"BT" indicates 2-butanol;
"MEK" indicates methyl ethyl ketone; and
"PT" indicates 2-pentanone.

Moreover, the proportional content (mass%) of each monomer unit in Table 1 is given as a value for which the second decimal place is rounded.

**Table 1**

| | | | | | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 |
|---|---|---|---|---|---|---|---|---|---|---|---|---|---|---|---|---|---|---|
| Binder composition | Particulate polymer | Block polymer | Aromatic vinyl block region | Type | ST | ST | ST | ST | ST | ST | ST | ST | ST | ST | ST | ST: 28.8 BD: 67.3 MAA: 3.8 | ST | ST |
| | | | | Proportional content [mass%] | 28.8 | 28.8 | 28.8 | 28.8 | 28.8 | 28.8 | 28.8 | 28.8 | 19.2 | 40.4 | 28.8 | | 28.8 | 28.8 |
| | | | Other region | Type | IP | IP | IP | BD | IP | IP | IP | IP | IP | IP | IP | | IP | IP |
| | | | | Proportional content [mass%] | 67.3 | 67.3 | 67.3 | 67.3 | 67.3 | 67.3 | 67.3 | 67.3 | 76.9 | 55.8 | 67.3 | | 67.3 | 67.3 |
| | | | Other region (graft portion) | Type | MAA | MAA | MAA | MAA | MAA | MAA | MAA | MAA | MAA | MAA | MAA | | MAA | MAA |
| | | | | Proportional content [mass%] | 3.8 | 3.8 | 3.8 | 3.8 | 3.8 | 3.8 | 3.8 | 3.8 | 3.8 | 3.8 | 3.8 | | 3.8 | 3.8 |
| | | | Structure | | Block | Block | Block | Block | Block | Block | Block | Block | Block | Block | Block | Random | Block | Block |
| | | Volume-average particle diameter [µm] | | | 0.15 | 0.15 | 0.15 | 0.4 | 0.52 | 0.58 | 0.15 | 0.15 | 0.4 | 0.4 | 0.15 | 0.15 | 0.8 | 0.05 |
| | Organic solvent | Type | | | EA | BT | PT | EA | EA | EA | - | EA | EA | EA | MEK | EA | EA | EA |
| | | Content (in binder) [mass ppm] | | | 100 | 100 | 100 | 100 | 100 | 100 | - | 2100 | 100 | 100 | 100 | 100 | 100 | 100 |
| | | Content (per 100 parts by mass of particulate polymer) [parts by mass] | | | 3.5 × 10⁻³ | 3.5 × 10⁻³ | 3.5 × 10⁻³ | 3.5 × 10⁻³ | 3.5 × 10⁻³ | 3.5 × 10⁻³ | - | 7.4 × 10⁻² | 3.5 × 10⁻³ | 3.5 × 10⁻³ | 3.5 × 10⁻³ | 3.5 × 10⁻³ | 3.5 × 10⁻³ | 3.5 × 10⁻³ |
| | | Solubility in water at 20°C [mass%] | | | 8.42 | 12.5 | 5.95 | 8.42 | 8.42 | 8.42 | - | 8.42 | 8.42 | 8.42 | 29 | 8.42 | 8.42 | 8.42 |
| | | Relative permittivity at 20°C [-] | | | 6 | 17 | 15 | 6 | 6 | 6 | - | 6 | 6 | 6 | 18 | 6 | 6 | 6 |
| Evaluation | Suitability for high-speed application and high-speed pressing | | | | A | A | A | A | B | B | A | A | A | A | A | C | C | c |
| | Low-temperature cycle characteristics | | | | A | B | A | A | A | B | C | B | A | A | B | D | C | C |
| | Electrolyte solution injectability | | | | B | A | A | B | B | B | C | B | B | B | A | B | B | C |

It can be seen from Table 1 that a slurry composition having excellent suitability for high-speed application and high-speed pressing and a secondary battery having excellent low-temperature cycle characteristics could be produced in Examples 1 to 11 in which the used binder composition contained a particulate polymer that was formed of a polymer including an aromatic vinyl block region and that had a volume-average particle diameter within the prescribed range.

On the other hand, it can be seen that sufficient suitability of a slurry composition for high-speed application and high-speed pressing could not be ensured and a secondary battery having excellent low-temperature cycle characteristics could not be produced in Comparative Example 1 in which the used binder composition contained a particulate polymer formed of a random polymer.

It can also be seen that sufficient suitability of a slurry composition for high-speed application and high-speed pressing could not be ensured in Comparative Examples 2 and 3 in which the used binder composition contained a particulate polymer having a volume-average particle diameter outside of the prescribed range.

### INDUSTRIAL APPLICABILITY

According to the present disclosure, it is possible to provide a binder composition for a non-aqueous secondary battery electrode that enables production of a slurry composition that can be used in high-speed application and high-speed pressing and that enables formation of an electrode for a non-aqueous secondary battery that can cause a non-aqueous secondary battery to display excellent low-temperature cycle characteristics.

Moreover, according to the present disclosure, it is possible to provide a slurry composition for a non-aqueous secondary battery electrode that can be used in high-speed application and high-speed pressing and that enables formation of an electrode for a non-aqueous secondary battery that can cause a non-aqueous secondary battery to display excellent low-temperature cycle characteristics.

Furthermore, according to the present disclosure, it is possible to provide an electrode for a non-aqueous secondary battery that can cause a non-aqueous secondary battery to display excellent low-temperature cycle characteristics.

Also, according to the present disclosure, it is possible to provide a non-aqueous secondary battery having excellent low-temperature cycle characteristics.

## Claims

1. A binder composition for a non-aqueous secondary battery electrode comprising: a particulate polymer formed of a polymer including a block region formed of an aromatic vinyl monomer unit; and water, wherein
the particulate polymer has a volume-average particle diameter of not less than 0.08 µm and less than 0.6 µm.

2. The binder composition for a non-aqueous secondary battery electrode according to claim 1, further comprising an organic solvent.

3. The binder composition for a non-aqueous secondary battery electrode according to claim 2, wherein the organic solvent has a solubility in water at 20°C of not less than 0.5 mass% and not more than 15 mass%.

4. The binder composition for a non-aqueous secondary battery electrode according to claim 2 or 3, wherein the organic solvent has a relative permittivity at 20°C of 14 or more.

5. The binder composition for a non-aqueous secondary battery electrode according to any one of claims 2 to 4, wherein the organic solvent has a content of not less than 1 mass ppm and not more than 3,000 mass ppm.

6. The binder composition for a non-aqueous secondary battery electrode according to any one of claims 2 to 4, wherein the organic solvent has a content of not less than 1.0 × 10⁻⁴ parts by mass and not more than 0.1 parts by mass per 100 parts by mass of the particulate polymer.

7. The binder composition for a non-aqueous secondary battery electrode according to any one of claims 1 to 6, wherein the polymer further includes either or both of an aliphatic conjugated diene monomer unit and an alkylene structural unit.

8. A slurry composition for a non-aqueous secondary battery electrode comprising: an electrode active material; and the binder composition for a non-aqueous secondary battery electrode according to any one of claims 1 to 7.

9. An electrode for a non-aqueous secondary battery comprising an electrode mixed material layer formed using the slurry composition for a non-aqueous secondary battery electrode according to claim 8.

10. A non-aqueous secondary battery comprising the electrode for a non-aqueous secondary battery according to claim 9.
